# FASCICULE DE BREVET EUROPEEN

(11) **EP 1 776 933 B1**
(45) Date de publication et mention de la délivrance du brevet: **30.01.2008**
(21) Numéro de dépôt: 05292190.5
(22) Date de dépôt: 18.10.2005
(51) Int. Cl.: A61C 13/30

(54) **Tenon dentaire coloré**
Gefärbter Zahnstift
Coloured dental post

(43) Date de publication de la demande: 25.04.2007
(73) Titulaire: Société de Recherches Techniques Dentaires - R.T.D., 38120 Saint Egrève (FR)
(72) Inventeur: Chu Manh-Quynh, 38120 Saint-Egrève (FR); Reynaud, Pierre-Luc, 39410 Vaulnaveys le Haut (FR)
(74) Mandataire: Denjean, Eric

(56) Documents cités:
- WO-A-01/08590
- FR-A- 2 753 365
- US-A1- 2002 152 929
- US-A1- 2003 027 102
- US-B1- 6 267 597

## Description

La présente invention concerne un tenon dentaire et plus particulièrement un tenon en matériau composite apte à posséder, avant sa mise en place dans le canal radiculaire d'une dent d'un patient, une couleur déterminée caractéristique de son diamètre et, après sa mise en place dans ledit canal, à perdre cette couleur.

On sait que dans l'art dentaire, les tenons métalliques utilisés pour reconstituer les dents dépulpées ont fait place ces dernières années à des tenons en matériau composite présentant de nombreux avantages et notamment une meilleure résistance aux phénomènes de corrosion, et un module d'élasticité transversal voisin de celui de la dentine leur conférant une meilleure cohérence avec cette dernière. Si les tenons en matériau composite classiques sont fixés dans le canal radiculaire au moyen de ciment, on connaît également des tenons composites réalisés en un matériau transparent en mesure de véhiculer la lumière permettant ainsi d'assurer la polymérisation d'un adhésif de fixation ainsi que décrit dans le brevet WO 01/08590.

On sait que le praticien a à sa disposition des tenons de différents diamètres ainsi que les forets qui leur sont associés. Afin de favoriser de façon rapide et sure cette association de chaque couple tenon/foret on a proposé de leur donner une couleur commune. Ainsi d'un seul coup d'oeil le praticien est en mesure d'établir cette association. Si le marquage de la couleur sur le foret ne présente aucune difficulté technique particulière il n'en est pas de même en ce qui concerne le marquage du tenon. On a proposé pour ce faire divers moyens et notamment soit de teinter le tenon dans la masse, soit d'appliquer une couleur à une extrémité de celui-ci, soit d'enfiler un joint torique ou un manchon coloré autour de sa section droite.

Si les différents moyens proposés permettent aux praticiens de reconnaître facilement à leur couleur la caractéristique diamétrale des tenons, ils présentent cependant chacun des inconvénients notables.

Ainsi, les tenons colorés dans la masse présentent l'inconvénient de créer un reflet coloré par transparence lorsqu'ils sont utilisés avec une prothèse en céramique.

L'application d'une peinture en extrémité du tenon empêche, quant à elle, la transmission de la lumière directement à l'intérieur de celui-ci, ce qui contraint le praticien à réaliser une découpe dudit tenon avant d'en effectuer la mise en place. Outre la contrainte supplémentaire à laquelle est soumise le praticien, cette technique ne peut quoiqu'il en soit être mise en place avec des tenons dont la longueur est fixe et prédéterminée.

Enfin la mise en place d'un joint torique ou d'un manchon coloré sur chacun des tenons est également une opération longue et coûteuse dans la mesure où, jusqu'à présent, elle s'effectue à la main, tenon après tenon.

Le document US 2003/0027102 A1 décrit un tenon dentaire comprenant des fibres pigmentées permettant d'identifier le tenon en bouche. Le document FR 2752156 décrit un tenon dont le corps est d'une couleur donnée pour un diamètre donné.

La présente invention a pour but de proposer un tenon dentaire selon la revendication 1, qui, lorsqu'il est mis à la disposition du praticien, possède une couleur déterminée, caractéristique de son diamètre, et qui, néanmoins, lorsqu'il est mis en place dans le canal radiculaire d'une dent, perd sa coloration, évitant ainsi toute coloration au travers de la couronne. En outre ce tenon est en mesure de recouvrer ensuite sa couleur sous certaines conditions de façon à favoriser sa localisation dans le cas d'une nouvelle intervention.

On sait que les produits thermochromes qui sont disponibles actuellement sur le marché sont constitués de pigments qui sont dans un état coloré lorsqu'ils se trouvent en dessous d'une certaine température de seuil et qui perdent cette couleur dès qu'ils passent au-dessus de cette température de seuil, pour redevenir coloré dès que la température descend de nouveau sous cette dite température de seuil. Ces pigments sont préférentiellement enrobés dans des micro-capsules ce qui leur permet alors d'être stables chimiquement par rapport à leur environnement. Certains de ces pigments sont commercialisés sous cette forme par la Société KELLY CHEMICAL CORPORATION. De tels pigments sont disponibles dans différentes couleurs, caractérisées par la référence «pantone» normalisée, et pour différentes températures de seuil.

On connaît l'utilisation de tels produits thermochromes dans des ciments dentaires destinés à assurer la fixation d'Inlay, de couronnes ou de bridges. Ainsi la demande de brevet US 2002/0152929 décrit un tel produit de scellement qui, à température ambiante et à une température voisine de celle du corps du patient, possède une teinte blanc-cassé ce qui lui permet de ne pas être visible lorsqu'il est recouvert par une couronne en céramique et qui, lorsqu'on le refroidit (ou on le réchauffe suivant le type de produit thermochrome utilisé) prend une couleur caractéristique, ce qui permet au praticien de repérer les éventuels débordements du produit autour de la dent susceptible de se former au cours de l'opération de scellement, afin de les supprimer, le produit de scellement reprenant ensuite sa teinte initiale lorsque cesse le stimulus thermique.

Suivant l'invention la quantité de produit thermochrome que l'on introduit dans la matrice de résine sera à la fois suffisante pour conférer au tenon une coloration permettant au praticien de le repérer par sa couleur (et éventuellement de l'associer au foret correspondant de même couleur) et suffisamment réduite pour ne pas l'opacifier de façon qu'il puisse transmettre, pendant le temps usuel d'éclairage d'une lampe dentaire à polymériser, suffisamment de lumière pour assurer la polymérisation d'un produit de fixation.

Préférentiellement suivant la présente invention la teneur en produit thermochrome sera comprise entre 0,1 et 1% en poids de la matrice de résine et/ou 0,02 à 0,2% en poids du tenon.

Dans un mode de mise en oeuvre de l'invention le produit thermochrome sera tel que la perte de couleur s'effectuera à une température de seuil comprise entre 30 et 40°C et préférentiellement aux environs de 31°C.

Les pigments utilisés pourront avantageusement être renfermés dans des micro-capsules qui les préserveront d'un contact direct avec la matrice de résine et dont l'enveloppe sera constituée d'un produit biocompatible avec la matrice du tenon, notamment une résine acrylique.

Suivant l'invention la matrice de résine pourra contenir au moins un monomère à base de Bisphénol A, ce monomère pouvant être à base de résine BISGMA.

Outre le fait que la présente invention permet au praticien de reconnaître le type de tenon au vu de la couleur de celui-ci, elle est également particulièrement intéressante dans le cas d'une reprise d'une dent précédemment soignée. En effet, dans le cas de la reconstitution d'une dent dépulpée, au moyen d'un tenon transparent, il est particulièrement difficile au praticien, qui veut intervenir de nouveau sur la dent, de reconnaître, en raison de sa transparence, le positionnement exact du tenon. Suivant l'invention, il sera possible de rendre le tenon de nouveau perceptible en lui faisant recouvrer sa couleur, et ceci en refroidissant la partie supérieure de la dent au moyen, par exemple d'un jet de fluide froid (air ou eau), projeté sur celle-ci. En raison du caractère de réversibilité du produit thermochrome, dès que cesse le refroidissement, le tenon perd de nouveau sa couleur.

La présente invention a également pour objet un procédé de fabrication par pultrusion d'un jonc selon la revendication 12. Préférentiellement la température à laquelle sera conduite la pultrusion sera inférieure à 200°C.

Suivant la présente invention, on a réalisé un tenon dentaire en associant à la résine constituant la matrice d'un tenon composite, une quantité déterminée de pigments thermochromes. Plus précisément, le tenon dentaire est constitué d'une matrice de résine, par exemple d'une matrice de résine époxy, ou de résine méthacrylique, dans laquelle on a mélangé une quantité déterminée de pigments thermochromes et, de façon classique, des fibres longues unidirectionnelles et continues réalisées dans une matière transparente, et notamment des fibres contenant un produit radio-opaque tel que par exemple un oxyde métallique et notamment de la zircone. L'ensemble est fabriqué suivant la technique connue dans le domaine des tenons dentaires, c'est-à-dire en deux étapes essentielles, à savoir une première étape de pultrusion fournissant un jonc et une seconde étape d'usinage mécanique au cours de laquelle on donne au tenon sa forme et ses dimensions.

Le tenon dentaire suivant la présente invention doit présenter des caractéristiques de transparence lui permettant une fois mis en place dans le canal radiculaire de la dent de transmettre les rayons lumineux à travers ledit canal dentaire et de distribuer ce rayonnement sur la périphérie du tenon, afin d'assurer la polymérisation d'un produit de scellement disposé à la mise en place entre le tenon dentaire et son logement. Un tel tenon dentaire doit donc posséder des caractéristiques de transmission de la lumière, ou transparence, suffisantes pour que l'opération de polymérisation puisse être menée avec succès.

Le tenon dentaire suivant l'invention doit, en outre, présenter lorsqu'il se trouve à l'extérieur de la dent, et donc lorsqu'il est soumis à une température ambiante c'est-à-dire inférieure à la température de seuil une coloration suffisante pour que sa couleur soit aisément reconnaissable par le praticien. Il sera ainsi possible de conférer au tenon une couleur déterminée qui sera fonction du diamètre du tenon et qui correspondra à la couleur du foret utilisé par le praticien pour usiner le canal radiculaire de la dent et l'amener au diamètre souhaité.

La couleur associée à ce tenon sera obtenue par la couleur intrinsèque dans la masse de celui-ci, et non pas par un ajout tel que par exemple une trace de peinture ou la mise en place d'un joint torique coloré ajouté à celui-ci évitant ainsi des manipulations coûteuses ainsi que des risques d'erreur.

On prendra garde suivant l'invention à ce que la quantité de pigments thermochromes ajoutée à la matrice de résine ne porte pas atteinte d'une part aux qualités mécaniques du tenon et, d'autre part, n'empêche pas la transmission de la quantité de lumière nécessaire à la polymérisation de son produit de fixation.

On a représenté dans le Tableau I ci-après un certain nombre de paramètres des tenons dentaires suivant l'invention. Ainsi, les colonnes du tableau ci-après représentent successivement la référence de couleur utilisée, la proportion des pigments dans une matrice de résine constituée de biphénol A, la valeur de la résistance au cisaillement inter-laminaire et à la résistance à la flexion à laquelle peut respectivement résister le tenon, et enfin la transmission de la lumière respectivement en début et en fin de polymérisation, ces mesures ayant été faites à une température ambiante de l'ordre de 25°C, se situant donc au dessous de la température de seuil.

**TABLEAU I**

| Pigment Référence pantone | Proportion de pigments dans la résine (en poids) | Résistance au cisaillement interlaminaire | Résistance à la flexion | Transmission de la lumière en mm -début de polymérisation -Polymérisation complète |
|---|---|---|---|---|
| Incolore | Non applicable | 65 MPa | 1600 MPa | 45mm |
| (ref. JTO) | | | | 40mm |
| Jaune | 0,6% | 67 MPa | 1640 MPa | 20mm |
| YT-31 Pantone 108C | | | | 17,5mm |
| Rouge | 0,6% | 64 MPa | 1620 MPa | 20mm |
| RT-31 Pantone 186C | | | | 17,5mm |
| Bleu | 0,3% | 67 MPa | 1660 MPa | 17,5mm |
| BT-31 Pantone 301U | | | | 15mm |
| Vert | 0,4% | 66 MPa | 1630 MPa | 20mm |
| DT-31 Pantone 335C | | | | 17,5mm |
| Noir | 0,4% | 63 Mpa | 1646 MPa | 20mm |
| LT-31 Pantone 5C2X | | | | 17,5mm |
| Orange | 0,2 % | 62 MPa | 1593 MPa | 30mm |
| OT-31 Pantone 021C | | | | 25mm |
| Violet | 0,4% | 62 MPa | 1648 MPa | 25mm |
| VT-31 Pantone 278C | | | | 20mm |

Les valeurs fournies dans ce tableau ont été obtenues à partir d'essais réalisés sur des joncs de matière composite, de diamètre de 2,50 mm, joncs qui seront ensuite usinés pour réaliser les tenons. Les caractéristiques mécaniques en cisaillement et en flexion ont été obtenues suivant les normes ISO 14130 et 14125 respectivement. La distance entre les appuis était de 12,5 mm pour le cisaillement inter-laminaire et de 50 mm pour la flexion.

La valeur mentionnée concernant la transmission de la lumière correspond à une longueur de l'échantillon qui est maximale permettant une polymérisation complète d'une goutte de résine photo-polymérisable, destinée à assurer la fixation du tenon dans le canal radiculaire de la dent, et des marques « SEALBOND BONDING RESIN » ou de la « DENTIN ENAMEL RESIN » fabriquées par la Société BISCO.

Le protocole mis en oeuvre pour mesurer la transmission de la lumière a été le suivant :
a) on a prélevé un échantillon de 50mm de longueur,
b) on a gradué cet échantillon tous les 5mm et on l'a inséré dans une plaque en matière plastique de couleur noire, d'épaisseur 1 mm ne laissant pas filtrer la lumière,
c) on a déposé à l'extrémité inférieure de l'échantillon une goutte de résine photopolymérisable du type de celles mentionnées précédemment,
d) on a exposé l'extrémité supérieure de l'échantillon au rayonnement fourni par une lampe à photopolymériser fournissant 400W/cm² pendant 40 secondes,
e) lorsque la résine n'a pas été entièrement polymérisée dans ces conditions d'éclairement, on a diminué de 5 mm la longueur de l'échantillon,
f) on a répété les trois opérations précédentes jusqu'à la polymérisation complète de la goutte de résine.

Dans ces conditions, la transmission de lumière correspond à la longueur maximale de l'échantillon, permettant une polymérisation complète de ladite goutte de résine.

Si l'on compare les résultats relatifs au tenon suivant l'invention avec les caractéristiques d'un tenon identique par ailleurs, mais dans lequel on n'a pas incorporé de produit thermochrome (cf.1^{ère} ligne du tableau) on constate que la caractéristique de résistance au cisaillement inter-laminaire est quasiment intégralement conservée quelque soit le pigment thermochrome utilisé, et qu'il en est de même de la caractéristique de résistance à la flexion.

En ce qui concerne la caractéristique de transmission de la lumière on constate que celle-ci est diminuée dans une importante proportion, mais on constatera cependant qu'elle permet néanmoins de réaliser une polymérisation totale dans un tenon de longueur 16mm, ce qui correspond sensiblement) à la longueur maximale des tenons utilisés dans la technique dentaire.

On peut bien entendu combiner plusieurs pigments thermochrome de couleurs différentes, afin d'obtenir une nouvelle couleur ou une nouvelle nuance de couleur.

**TABLEAU II**

| Pigment Référence pantone | Proportion de pigments dans la résine (en poids) | Résistance au cisaillement interlaminaire | Résistance à la flexion | Transmission dela lumière en mm -début polymérisation -Polymérisation complète |
|---|---|---|---|---|
| Vert: mélange de bleu BT-31 et de jaune YT-31 | Bleu 0,05% | 71 MPa | 1596 MPa | 25mm |
| | Jaune 0,25% | | | |
| | | | | 17,5mm |

Ainsi, comme représenté dans le Tableau II précédent, on a mélangé dans la matrice de résine à partir de laquelle on fabrique le tenon, des pigments bleu et jaune qui, une fois le tenon terminé, fournissent un tenon de couleur verte dont les caractéristiques de cisaillement interlaminaire et de flexion sont parfaitement conservées et la caractéristique de transmission est de 17,5 mm.

On comprend que plus la teneur du tenon en produit thermochrome sera importante plus la couleur du tenon à la température ambiante sera saturée, ce qui sera de nature à favoriser son repérage d'une part lors du choix du praticien avant sa mise en place dans le canal radiculaire et de seconde part lors d'une réintervention lorsque l'on refroidit la dent, mais moins sera bonne alors la transmission de la lumière lorsque le tenon sera en place. On a établi qu'une teneur en produit thermochrome comprise entre 0,02 et 0,2% en poids du tenon ou entre 0,1 et 1% en poids de la matrice de résine permettait d'assurer une transmission de la lumière suffisante pour assurer en toute sécurité la polymérisation d'un produit de fixation tout en permettant au tenon de garder, à température ambiante, une couleur suffisante pour être facilement repérable.

## Revendications

1. Tenon dentaire en matériau composite constitué de fibres longues noyées dans une matrice de résine, ce tenon étant apte à transmettre, un rayonnement lumineux, lorsqu'il est éclairé par une lampe dentaire, afin d'assurer la polymérisation d'un produit de fixation dudit tenon dans le canal radiculaire d'une dent, ce tenon ayant une couleur spécifique déterminée avant sa mise en place dans ledit canal, **caractérisé en ce qu'**il contient au moins un produit de type thermochrome dont la couleur est choisie en fonction du diamètre dudit tenon apte à lui conférer ladite couleur spécifique lorsqu'il est à la température ambiante et à lui faire perdre sa couleur, lorsqu'il se trouve en place dans ledit canal.

2. Tenon dentaire selon la revendication 1 **caractérisé en ce que** sa teneur en produit thermochrome est comprise entre 0,02 et 0,2% en poids du tenon.

3. Tenon dentaire selon l'une des revendications 1 ou 2 **caractérisé en ce que** sa teneur en produit thermochrome est comprise entre 0,1 et 1% en poids de la matrice de résine.

4. Tenon dentaire selon l'une des revendications précédentes, **caractérisé en ce que** le produit thermochrome est tel que la perte de couleur spécifique s'effectue à une température de seuil comprise entre 30 et 40°C.

5. Tenon dentaire selon la revendication 4, **caractérisé en ce que** le produit thermochrome est tel que ladite température de seuil est voisine de 31°C.

6. Tenon dentaire selon l'une des revendications précédentes, **caractérisé en ce que** les produits thermochromes sont renfermés dans des micro-capsules:

7. Tenon dentaire selon la revendication 6, **caractérisé en ce que** les envelopes des micro-capsules sont constituées de résine acrylique.

8. Tenon dentaire selon l'une des revendications précédentes, **caractérisé en ce que** la matrice de résine contient au moins un monomère à base de Bisphénol A.

9. Tenon dentaire selon la revendication 8, **caractérisé en ce que** ledit monomère est à base de résine BISGMA.

10. Tenon dentaire selon l'une des revendications précédentes **caractérisé en ce qu'**il comporte des fibres radio-opaques.

11. Tenon dentaire selon la revendication 10, **caractérisé en ce que** les fibres radio-opaques contiennent un oxyde métallique, et notamment de la zircone.

12. Procédé de fabrication par pultrusion d'un jonc, destiné à constituer par usinage un tenon dentaire en matériau composite constitué de fibres longues noyées dans une matrice de résine, **caractérisé en ce que** ce tenon contient en outre au moins un produit de type thermochrome dont la couleur est choisie en fonction du diamètre dudit tenon, enfermé dans des micro-capsules, la température à laquelle est conduite la pultrusion étant inférieure à la température de fusion des micro-capsules.

13. Procédé suivant la revendication 12 **caractérisé en ce que** la température à laquelle est conduite la pultrusion est inférieure à 200°C.

## Claims

1. A dental post made of composite material consisting of long fibers embedded in a resin matrix, said post being able to transmit visible radiation when lit with a dental lamp to ensure the polymerization of a product for setting said post in a tooth's root canal, said post having a specific colour determined before its insertion into the canal, **characterized in that** it contains at least one thermochromic substance whose the colour is chosen according to the diameter of the post, said thermochromic substance being able to provide said specific colour when it is at ambient temperature and to make it lose its colour when inserted into the canal.

2. The dental post of claim 1, **characterized in that** its thermochromic substance content is between 0.02 and 0.2% by weight of the post.

3. The dental post according to one of claims 1 or 2, **characterized in that** its thermochromic substance content is between 0.1 and 1% by weight of the resin matrix.

4. The dental post according to one of preceding claims, **characterized in that** the thermochromic substance is such that its specific colour loss occurs at a threshold temperature between 30 and 40°C.

5. The dental post of claim 4, **characterized in that** the thermochromic substance is such that said threshold temperature is approximately 31°C.

6. The dental post according to one of preceding claims, **characterized in that** the thermochromic substances are enclosed in micro-capsules.

7. The dental post of claim 6, **characterized in that** the envelopes of the micro-capsules consist of an acrylic resin.

8. The dental post according to one of preceding claims, **characterized in that** the resin matrix contains at least one Bisphenol-A-based monomer.

9. The dental post of claim 8, **characterized in that** said monomer is BisGMA resin based.

10. The dental post according to one of preceding claims, **characterized in that** said post contains radiopaque fibers.

11. The dental post of claim 10, **characterized in that** the radiopaque fibers contain a metal oxide, and notably zircon.

12. A method for forming a rod by pultrusion used to constitute, after machining, a dental post made of composite material, consisting of long fibers embedded in a resin matrix, **characterized in that**:
- this post contains at least one thermochromic substance having a specific colour characteristic of the diameter of said post, enclosed in microcapsules,
- the temperature at which pultrusion is performed being lower than the micro-capsules' melting temperature.

13. The method of claim 12 wherein the temperature at which pultrusion is performed is lower than 200°C.

## Patentansprüche

1. Zahnstift aus Verbundwerkstoff, der aus langen, in einen Harzgrundstoff eingebetteten Fasern besteht, wobei dieser Stift eine Lichtstrahlung durchlassen kann, wenn er mit einer Dentallampe bestrahlt wird, um die Polymerisierung eines Fixierungsprodukts für den Stift im Wurzelkanal eines Zahns sicherzustellen, wobei dieser Stift vor seinem Einsetzen in den Kanal eine bestimmte spezifische Farbe hat, **dadurch gekennzeichnet, dass** er mindestens ein thermochromes Produkt, dessen Farbe in Abhängigkeit vom Durchmesser des Stifts gewählt ist, enthält, das ihm die spezifische Farbe zu verleihen vermag, wenn er sich auf Umgebungstemperatur befindet, und ihn seine Farbe verlieren lässt, wenn er sich in den Kanal eingesetzt befindet.

2. Zahnstift nach Anspruch 1, **dadurch gekennzeichnet, dass** sein Gehalt an thermochromem Produkt zwischen 0,02 und 0,2 Gew.-% des Stifts beträgt.

3. Zahnstift nach Anspruch 1 oder 2, **dadurch gekennzeichnet, dass** sein Gehalt an thermochromem Produkt zwischen 0,1 und 1 Gew.-% des Harzgrundstoffs beträgt.

4. Zahnstift nach einem der vorhergehenden Ansprüche, **dadurch gekennzeichnet, dass** das thermochrome Produkt so beschaffen ist, dass der Verlust der spezifischen Farbe bei einer Schwellentemperatur stattfindet, die zwischen 30 und 40°C liegt.

5. Zahnstift nach Anspruch 4, **dadurch gekennzeichnet, dass** das thermochrome Produkt so beschaffen ist, dass die Schwellentemperatur um die 31°C liegt.

6. Zahnstift nach einem der vorhergehenden Ansprüche, **dadurch gekennzeichnet, dass** die thermochromen Produkte in Mikrokapseln eingeschlossen sind.

7. Zahnstift nach Anspruch 6, **dadurch gekennzeichnet, dass** die Umhüllungen der Mikrokapseln aus Acrylharz bestehen.

8. Zahnstift nach einem der vorhergehenden Ansprüche, **dadurch gekennzeichnet, dass** der Harzgrundstoff mindestens ein Monomer auf Basis von Bisphenol A enthält.

9. Zahnstift nach Anspruch 8, **dadurch gekennzeichnet, dass** das Monomer auf Basis des Harzes BISGMA ist.

10. Zahnstift nach einem der vorhergehenden Ansprüche, **dadurch gekennzeichnet, dass** er strahlenundurchlässige Fasern umfasst.

11. Zahnstift nach Anspruch 10, **dadurch gekennzeichnet, dass** die strahlenundurchlässigen Fasern ein Metalloxid und insbesondere Zirkon enthalten.

12. Verfahren zur Herstellung eines Stabs durch Pultrusion, der dazu bestimmt ist, durch Bearbeitung einen Zahnstift aus Verbundwerkstoff zu bilden, der aus langen, in einen Harzgrundstoff eingebetteten Fasern besteht, **dadurch gekennzeichnet, dass** der Stift außerdem mindestens ein in Mikrokapseln eingeschlossenes thermochromes Produkt enthält, dessen Farbe in Abhängigkeit vom Durchmesser des Stifts gewählt ist, wobei die Temperatur, bei der die Pultrusion durchgeführt wird, niedriger ist als die Schmelztemperatur der Mikrokapseln.

13. Verfahren nach Anspruch 12, **dadurch gekennzeichnet, dass** die Temperatur, bei der die Pultrusion durchgeführt wird, unter 200°C liegt.
